# EUROPEAN PATENT APPLICATION

(11) **EP 4 725 785 A1**
(43) Date of publication of application: **15.04.2026**
(21) Application number: 24205479.9
(22) Date of filing: 09.10.2024
(51) Int. Cl.: B60W 50/00

(54) **AUTOMOTIVE CONTROLLER AND CONTROL METHOD FOR A VEHICLE**

(71) Applicant: NXP B.V., 5656 AG Eindhoven (NL)
(72) Inventor: Saracevic,, Omar, 5656 AG Eindhoven (NL); Gu tin,, Matja, 5656 Eindhoven (NL)
(74) Representative: Krott, Michel

(57) **Abstract**

The invention relates to an automotive controller (100) for a vehicle (102) configured to: receive (224) external sensing data representative of an area surrounding the vehicle; determine approaching user data from the external sensing data, wherein the approaching user data represents one or more approaching users (108-1, 108-2, 108-3); and output (226) a control signal to set one or more personalised vehicle settings based on the approaching user data.

The invention further relates to a corresponding method.

## Description

### Field

The present disclosure relates to an automotive controller for a vehicle and in particular to an automotive controller for setting personalised vehicle settings based on received external sensing data.

### Summary

According to a first aspect of the present disclosure there is provided an automotive controller for a vehicle configured to:
receive external sensing data representative of an area surrounding the vehicle;
determine approaching user data from the external sensing data, wherein the approaching user data represents one or more approaching users; and
output a control signal to set one or more personalised vehicle settings based on the approaching user data.

In one or more embodiments the approaching user data may comprise an expected entry point of each of the one or more approaching users. The controller may be configured to output the control signal to set one or more personalised vehicle settings for each approaching user based on the respective expected entry point.

In one or more embodiments, the external sensing data may comprise localisation data. The automotive controller may be configured to:
determine user trajectory data from the localisation data; and
determine the expected entry point of one or more approaching users using the user trajectory data.

In one or more embodiments, the controller may be configured to determine the expected entry point of one or more connected users of the one or more approaching users using the user trajectory data. The one or more connected users may comprise users having a smart device connected with the automotive controller.

In one or more embodiments, the external sensing data may comprise imagery data. The automotive controller may be configured to:
identify the one or more approaching users from the imagery data;
determine user trajectory data by performing motion detection using the imagery data for one or more unconnected users of the one or more approaching users; and
determine the expected entry point of the one or more unconnected users using the user trajectory data.

The external sensing data may comprise UWB data. The localisation data may comprise UWB ranging data. The imagery data may comprise UWB radar data.

In one or more embodiments, the automotive controller may be configured to, for each approaching user, output the control signal to set personalised vehicles settings for an area of an internal cabin of the vehicle associated with the expected entry point of the respective user.

In one or more embodiments, the automotive controller may be configured to output the control signal to set one or more seat position settings of a seat associated with the expected entry point of each approaching user.

In one or more embodiments, the automotive controller may be configured to receive user setting preferences for at least one user of the one or more approaching users and output the control signal to set the personalised vehicle settings for the at least one user based on the respective user setting preferences.

In one or more embodiments, the automotive controller may be configured to:
receive the user setting preferences for the at least one user from a smart device of the respective user; or
receive a user ID of the at least one user from a smart device of the respective user and retrieve the user setting preferences from a memory of the vehicle or a remote server, based on the user ID.

In one or more embodiments, the external sensing data may comprise imagery data and the automotive controller may be configured to:
determine one or more physical attributes of at least one user of the one or more approaching users from the imagery data; and
output the control signal to set the personalised vehicle settings for the at least one user based on the respective one or more physical attributes.

In one or more embodiments, the automotive controller may be configured to:
identify a conflict between first personalised vehicle settings of a first user and second personalised vehicle settings of a second user; and
determine rationalised vehicle settings based on the first personalised vehicle settings and the second personalised vehicle settings; and
output the control signal to set the rationalised vehicle settings for the first and second users.

The first user may be associated with a first seat and the second user may be associated with a second seat immediately behind or adjacent to the first seat.

In one or more embodiments, the automotive controller may be configured to:
determine that a plurality of approaching users have the same expected entry point based on the external sensing data;
receive internal ranging data and/or internal radar data to determine final seating locations of each of the plurality of approaching users; and
output the control signal to set the personalised vehicle settings for each of the plurality of users based on the final seating locations.

In one or more embodiments, the automotive controller may be configured to:
determine that a plurality of approaching users have the same expected entry point based on the external sensing data;
determine final seating locations based on an order in which the plurality of approaching users enter the vehicle; and
output the control signal to set the personalised vehicle settings for each of the plurality of users based on the final seating locations.

In one or more embodiments, the automotive controller may be configured to output the control signal to set one or more personalised vehicle settings comprising one or more of:
driver specific settings for a driver user;
passenger safety settings for one or more passenger users;
seat position settings for one or more users;
heating ventilation and air conditioning (HVAC) system settings for one or more users;
infotainment settings for one or more users;
audio settings for one or more users; and
light settings for one or more users.

According to a second aspect of the present disclosure there is provided an automotive system comprising:
one or more ultra-wideband, UWB, sensors; and
any automotive controller disclosed herein, wherein the automotive controller is configured to receive the external sensing data as UWB data from the one or more UWB sensors.

According to a third aspect of the present disclosure there is provided a method of setting one or more personalised vehicle settings of a vehicle for one or more approaching users, the method comprising:
receiving external sensing data representative of an area surrounding the vehicle;
determining approaching user data from the external sensing data, wherein the approaching user data represents the one or more approaching users; and
outputting a control signal to set the one or more personalised vehicle settings based on the approaching user data.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 illustrates an automotive controller for a vehicle according to an embodiment of the present disclosure; and
Figure 2 illustrates a process of setting personalised vehicle settings for one or more approaching users according to an embodiment of the present disclosure.

### Detailed Description

Many vehicles are driven by multiple different users at different times, e.g. multiple members of the same family or multiple employees of the same employer. Typically, these different users have different vehicle setting preferences for vehicle settings such as seat position, steering wheel settings, mirror orientations, HVAC settings, infotainment settings and the like. Users can adjust these settings upon entering the vehicle, however this adjustment can become a frustrating distraction if a different user with significantly different preferences was the previous user of the vehicle. Setting up the various in-cabin customization features in modern vehicles can be a time-consuming and repetitive process that depends on the personal preferences of the person occupying a particular seat. Needing to manually modify the configurations each time can also present safety risks. Firstly, a user may only notice that a particular vehicle setting such as a mirror orientation or seat position requires adjustment after they start their journey and attempt to adjust the mirror or seat while driving, thereby creating a hazardous distraction. Secondly, the settings themselves may be safety critical such as the proximity of a seat to an airbag, a steering wheel adjustment or an incorrect mirror orientation reducing visibility.

The above concerns are not only limited to vehicle drivers. Vehicle passengers can also be hazardously distracted, for example adjusting seat positions or HVAC settings prior to securing their seat belt, even after the driver has started the journey.

Vehicle settings such as seat positions and mirror orientations are often controlled via an electric motor and a finite time of a few seconds may be required to adjust a particular vehicle setting. Therefore, vehicles with personalised "preset" configurations can still present hazardous conditions as a driver may commence a journey prior to completion of the adjustment of the vehicle settings.

The present disclosure provides an automotive controller that can set personalised vehicle settings based on external sensing data representing an area surrounding the vehicle.

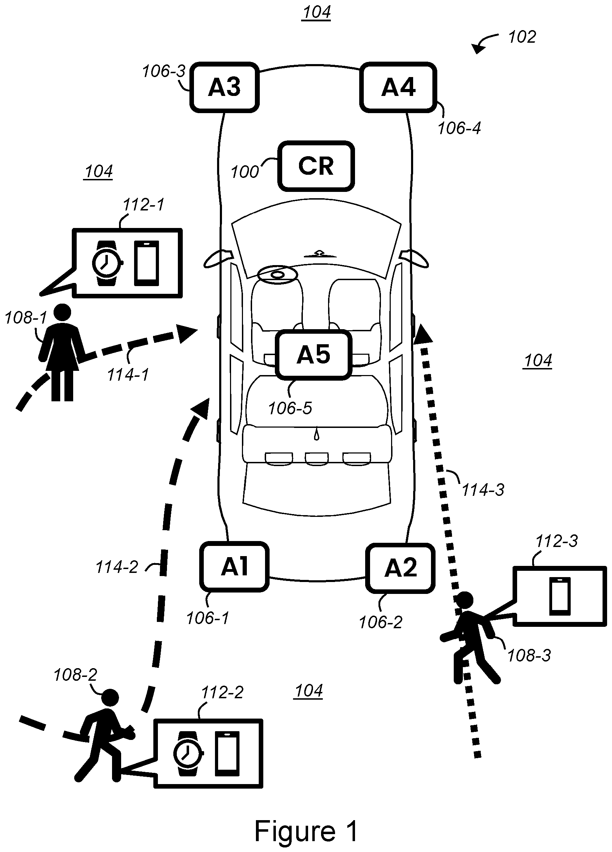

Figure 1 illustrates an automotive controller 100 for a vehicle 102 according to an embodiment of the present disclosure. The automotive controller 100 (which may be referred to herein as the controller) receives external sensing data representative of an area 104 surrounding the vehicle 102. In this example, the controller 100 receives the external sensing data as ultra-wideband (UWB) data from a plurality of UWB sensors 106-1, 106-2, 106-3, 106-4, 106-5 (also labelled *A1-A5* in the figure). The controller 100 determines approaching user data from the external sensing data. The approaching user data represents one or more approaching users 108-1, 108-2, 108-3 (referred to generally as users 108). The controller 100 outputs a control signal to set one or more personalised vehicle settings based on the approaching user data.

By making use of external sensing data, the controller can advantageously apply personalised vehicle settings for approaching users before they enter the vehicle. As explained below, the controller 100 can use the external sensing data to identify which door a user is approaching and apply personalised vehicle settings accordingly (e.g. to specific seats, specific areas of the internal cabin and/or apply specific driver settings for the driver seat). By setting personalised vehicle settings as users approach the vehicle, the controller 100 is not reliant on determining which users are in which seat based on in-cabin data. Ranging can be difficult within the cabin because the vehicle can act like a metal chamber providing multiple reflections that can make the ranging data hard to interpret. In some examples, the controller 100 can advantageously make use of external sensing data from sensors that are already present on the vehicle for external ranging and/or radar functions, e.g. UWB data from UWB sensors.

In the illustrated example the external sensing data comprises UWB data, which is continually referred to throughout, in particular with respect to UWB ranging data and UWB radar data. However, other sensing technologies can be used, such as Bluetooth ^{®}, Wi-Fi ^{®}, camera sensors, radar sensors, LiDAR sensors, among others.

UWB ranging data is an example of localisation data that can detect locations and trajectories of approaching users 108. As described herein, localisation data comprises data that is indicative of a location of the one or more approaching users. In some examples, the localisation data may comprise: ranging data, UWB ranging data, Bluetooth channel sounding data, other radar data such as 77 GHz radar data and/or camera data.

UWB radar data is an example of imagery data that can be used to detect locations and trajectories (with less accuracy than localisation data) and perform shape detection and user physical attribute detection. As disclosed herein, imagery data comprises data that can provide an image or pseud image of the one or more approaching users. In some examples, imagery data may include: camera data, radar data, UWB radar data and/or LiDAR data.

In some examples, sensor fusion may combine the imagery data with the localisation data. For example, Bluetooth channel sounding data may be combined with camera data or 77GHz radar data to provide the combined benefits of localisation data and imagery data, as described below in relation to the specific examples of UWB ranging data and UWB radar data.

The controller 100 can process the UWB data to determine an expected entry point of each of the one or more users 108. In some examples, the UWB data may comprise UWB ranging data (which is an example of localisation data) for one or more connected users 108 carrying a smart device 112-1, 112-2, 112-3 (such as a smart phone or wearable device) configured (or enabled) for UWB ranging with the vehicle 102. The UWB ranging data may be based on ranging communications between the one or more UWB sensors 106 on the vehicle 102 and the respective smart device 112-1, 112-2, 112-3. The controller 100 may determine user location data and/or user trajectory data 114-1, 114-2, 114-3 for each of the one or more connected users 108 based on the UWB ranging data. The controller 100 may determine an expected entry point for each connected user 108 based on a path of the respective user trajectory data 114-1, 114-2, 114-3. The controller 100 may use known ranging methods to perform a ranging routine between the sensors 106 and the smart device 112-1, 112-2, 112-3, and these known methods are not described in detail here.

In some examples, the UWB data may comprise UWB radar data (which is an example of imagery data). The controller 100 can advantageously use UWB radar data to identify approaching users irrespective of whether they have a smart device configured for UWB ranging. For example, the controller 100 can identify approaching users 108 without a smart device (e.g. children) or approaching users who have a smart device that is not configured (or enabled) for UWB ranging with the vehicle 102. The controller 100 may process the UWB radar data to identify the one or more users 108 in the UWB radar data. The controller 100 may apply shape recognition to identify the one or more users 108. The UWB radar data may comprise UWB Doppler data or other periodic scan data enabling motion detection of the identified users 108. The controller 100 may process the UWB radar data to identify the users 108, detect user motion and determine user trajectory data for each user based on the detected motion. The controller 100 may determine an expected entry point based on the user trajectory data.

The controller 100 may also determine one or more user physical attributes based on the UWB radar data (or imagery data more generally). For example, the controller 100 may determine a user height, user body proportions, or a user posture based on the UWB radar data. As described below, the controller 100 may determine the control signal based on the one or more physical attributes.

The controller 100 may also determine a total number of users 108 (i.e. including both connected and unconnected users) based on the UWB radar data(or imagery data more generally). The controller 100 may output the control signal to set one or more personalised vehicle settings that depend on the total number of users 108 entering the vehicle (e.g. HVAC settings, driving performance settings etc).

UWB ranging data (or localisation data more generally) can advantageously provide more accurate user location data and user trajectory data than UWB radar data. However, UWB radar data (or imagery data more generally) can provide user location data and user trajectory data for unconnected users, that do not have a smart device or do not have a smart device configured for UWB ranging with the vehicle 102. The UWB radar data can also provide the total number of approaching users and user physical attributes as described above. In some examples, the controller 100 may receive both UWB ranging data and UWB radar data (or both localisation and imagery data) which can provide both precise user trajectory data and user physical attribute data.

In some examples, the controller 100 may receive user setting preferences. The user setting preferences may be received direct from a smart device 112-1, 112-2, 112-3 of the one or more users 108. Alternatively, the user setting preferences of one or more users 108 may be stored in a memory of the vehicle 102 or on a remote server, with an associated user ID. The controller 100 may receive a user ID from a smart device of one or more users 108 and retrieve the corresponding user setting preferences from the memory/server. The user setting preferences or user ID may be received via any appropriate communication protocol such as Bluetooth ^{®} low energy or Wi-Fi ^{®}. The controller 100 may receive user setting preferences (or a user ID) from smart devices of unconnected users (i.e. smart devices not configured for UWB ranging).

The controller 100 may set the personalised vehicle settings (via the control signal) for one or more users based on their respective set of received user setting preferences. The user setting preferences may comprise a range of validity for one or more of the vehicle settings (e.g. a seat backrest inclination from A to B is acceptable, a HVAC temperature from C to D is acceptable, etc). The user setting preferences may comprise a "no preference" value for one or more of the vehicle settings (e.g. user does not mind low or high audio volume).

If the controller 100 does not receive user setting preferences for any of the one or more approaching users 108 identified from the UWB data (or external sensing data more generally), the controller 100 may set one or more of the personalised vehicle settings based on the user physical attributes. For example, the controller 100 may output the control signal to set driver specific settings, passenger safety settings and/or seat position settings based on the user physical attributes. For example, the controller 100 may set a seat height and position, activate a child lock and / or deactivate an airbag if the user height indicates the user is a child. The controller 100 can use the physical attributes as a best-estimate to set personalised seat positions and/or child specific settings for users without a smart device enabled for localisation, such as UWB ranging, or for users without any user setting preferences. This covers the taxi-passenger use case.

In some examples, the controller 100 may output the control signal to apply default settings for any settings for which there is no user setting preference and no setting based on the user physical attributes.

The control signal may set one or more personalised vehicle settings for each user 108. The personalised vehicle settings may include one or more of: driver specific settings for a driver user 108-1; passenger safety settings for one or more passenger users 108-2, 108-3; seat position settings for one or more users 108; heating ventilation and air conditioning (HVAC) system settings for one or more users 108; infotainment settings for one or more users 108; audio settings for one or more users 108; and light settings for one or more users 108.

The driver specific settings may include one or more of the following:
i. steering wheel settings including one or more of: depth, height, hardness, and amount of turns for max steering (for electronically controlled steering);
ii. mirror settings including one or more of: orientation of one or more mirrors (e.g. external and central mirrors), and dimming of each mirror (if possible);
iii. dashboard settings including one or more of: brightness, and information shown (e.g. speed, RPMs, navigation etc.)
iv. driving performance settings including one or more of: eco-mode, sport-mode and suspensions hardness; and
v. driving assistance settings including one or more of: enable/disable ESP, lane assist, distance from car in front, break strength, and accelerator strength.

Driver specific settings can be particularly important for safety as they can be optimised for a specific driver and how they are used to driving.

The passenger safety settings may include one or more of: child-lock settings for one or more doors (parent-administered setting for children preferences), airbag deactivation settings for specific scenarios and/or specific people, and height settings of one or more seatbelt pulley points.

The seat position settings may include one or more of: forward-backward position, reclining angle, headrest height, headrest depth, or lumbar support.

The HVAC settings may include one or more of: temperature, humidity, air vent orientation (e.g. away from face or feet), fan speed (noise), opening of windows, opening of roof and seat heating.

The infotainment settings may include one or more of: monitor brightness, GUI language, font face, font size, light/dark mode, icon sizes, and colour-blindness mode.

The audio settings may include one or more of: volume, equalisation, space balancing, and willingness to connect to vehicle's infotainment (Bluetooth) for phone calls and/or music.

The light settings may include one or more of: sun visor position, in-cabin lights when dark (e.g. for reading), window panes electric shading, and roof window shade opening/closing.

The above list is non-exhaustive and the control signal may set further personalised vehicle settings.

In some examples, the controller 100 may determine an expected entry point of each user 108 (as described above) and output the control signal to set one or more personalised vehicle settings for each user 108 based on the respective expected entry point. The controller 100 may set personalised vehicle settings for an area of the internal cabin associated with the expected entry point. For example, the controller 100 may set seat position settings for a seat associated with the expected entry point. The controller 100 may set one or more of: driver specific settings, passenger safety settings, HVAC settings, audio settings and lighting settings, for an area of the cabin associated with the expected entry point.

For example, the controller 100 may determine that the expected entry point of a first user 108-1 is a driver's door. In response, the controller 100 may output the control signal to set personalised vehicle settings corresponding to the first user, including one or more of: driver specific settings, seat position settings for a driver's seat, HVAC settings, infotainment and audio settings. The controller 100 may set the personalised vehicle settings based on one or more of: user setting preferences received from the smart device 112-1 of the first user; user physical attributes determined from UWB radar data; and default settings.

As a further example, the controller 100 may determine that the expected entry point of a second user 108-2 is a passenger door. In response, the controller 100 may output the control signal to set personalised vehicle settings corresponding to the second user, including one or more of: passenger safety settings, seat position settings and HVAC settings, for an area of the cabin associated with the passenger door.

In some examples, the controller 100 may rationalise the personalised vehicle settings for different areas of the cabin and output the control signal to apply the rationalised/compromised settings. As an example, in Figure 1, the first user 108-1 will sit in a seat in front of the second user 108-2. If both the first user 108-1 and the second user 108-2 require maximum leg room (as indicated via the user setting preferences or the user physical attributes) the controller 100 may determine a rationalised setting that each user has a medium amount of leg room. The controller 100 may output the control signal to apply the rationalised setting. In some examples, the controller 100 may bias the rationalised setting in favour of the driver's requirements / preferences as the driver's requirements are more safety critical. In some examples, the controller 100 may rationalise other settings such as contrasting HVAC settings for adjacent seats.

In some examples, the controller 100 may determine that a plurality of users have the same expected entry point (e.g. the same rear passenger door). The controller 100 may perform a final seating position check after the users 108 have entered the vehicle. The controller 100 may receive ranging data and/or radar data from one or more internal in-cabin sensors to determine the final seating positions of the users 108. In some examples, the controller 100 may determine a final seating position of the users 108 based on an order that the users 108 enter the vehicle. The controller 100 may determine a final seating position of the first user to enter the entry point to be the seat laterally across from the entry point and determine the final seating position of the second user to enter the entry point to be a seat adjacent to the entry point.

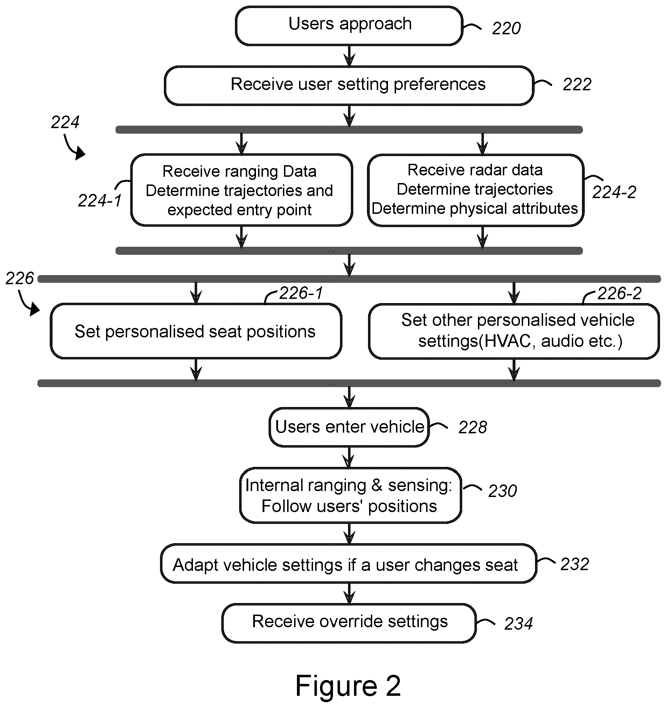

Figure 2 illustrates a process of setting personalised vehicle settings for one or more approaching users according to an embodiment of the present disclosure. One or more steps of the process may be performed by the controller of Figure 1.

A first step 220 (not performed by the controller) comprises one or more users approaching a parked vehicle. The one or more approaching users may be carrying cargo and may have accompanying pets. The controller may apply shape detection algorithms that can account for such anomalies when processing imagery data such as UWB radar data. One or more of the approaching users may have a smart device (smartphone, wearable etc.). The smart device may be preconfigured for communication with the vehicle, e.g. for passive or remote access. Alternatively, the smart device may not be preconfigured (if the user is a passenger in a friend's vehicle).

A second step 222 comprises receiving user setting preferences from one or more users. As the users approach the vehicle, any smart devices (smartphones, wearables etc.) that are enabled for communication with the vehicle can provide the user setting preferences to a vehicle access system via a radio data link (e.g. Bluetooth ^{®} of Wi-Fi ^{®}). The user setting preferences may be received:
a. Directly: the controller receives the user setting preferences from the smart device as a data structure containing information about the preferred configuration.
b. Indirectly: the controller receives an identifier form the smart device which the controller uses to retrieve the user setting preferences from the vehicle memory or from a remote service (e.g. cloud server).

A third step 224 comprises receiving external sensing data, such as UWB data, to determine an expected entry point for each approaching user. The vehicle's localisation system (e.g. UWB sensors) can detect the position and trajectories of each user in order to understand which vehicle door (and consequently seat) each user is approaching:
a. based on ranging 224-1 with the connected smart devices (if enabled to do so)
b. based on radar sensing 224-2 outside of the vehicle, even if the user does not have an (enabled) smart device. The radar sensing might additionally estimate physical attributes of each user without an (enabled) mobile device to at least provide an educated guess of their height and body proportions for the seat positioning and leg room personalised vehicle settings.
c. Based on both ranging and radar sensing.

A fourth step 226 comprises outputting a control signal to set personalised vehicle settings for each approaching user. As a first sub-step 226-1, the controller outputs the control signal to set personalised seat position settings (height, inclination, leg space etc.) via in-seat motors based on the user setting preferences, user physical attributes, and/or default settings, for each approaching user. The control signal sets the personalised seat settings for the seat associated with the expected entry point (door) of each approaching user. The first sub-step can take a few seconds, however, as it's happening while the users approach the vehicle, they don't have to wait for each personalised seating configuration to be applied after they enter the vehicle.

At the same time, or following, the first sub-step 226-1, a second sub-step 226-2 may be performed comprising outputting the control signal to set one or more personalised vehicle settings for the vehicle settings other than seat positions. The controller may match user setting preferences of each user to their in-cabin position. If the vehicle (e.g. low-end models) does not support all possible user setting preferences (e.g. motorised seats), the controller may apply whatever setting is possible. For users without (enabled) smart devices, no user setting preferences are available, and the controller may apply vehicle settings based on the user physical attributes (e.g. child related settings) and/or apply default settings or average settings based on the other connected users' user setting preferences.

If the controller attempts to set personalised vehicle settings for different users that clash or conflict, then the controller may rationalise / compromise the conflicting settings and select a middle ground of settings for each user (e.g. both the front and back passengers want as much leg room as possible, but they would be "stealing" it from each other).

At a fifth step 228 (not performed by the controller), the users enter the vehicle. As the personalised vehicle settings have been set for each user, they do not need to fiddle with manual settings. The driver can safely commence the journey and the passengers can proceed straight to engaging their seat belts.

A sixth step 230 may comprise receiving internal ranging data, internal radar data and/or additional internal sensing data (e.g. seat pressure sensing data) to track user movements within the cabin and determine final seating positions, particularly for users that enter the vehicle at the same entry point (door). For example, two users may enter from the back-right door of a passenger car, with the first user moving over to the left side of the back seat, the second user taking the right side of the back seat. The controller may receive the internal ranging and/or radar data to track the users (e.g. via UWB ranging and potentially sensor fusion with other technologies). A seventh step 232 may comprise adapting the personalised vehicle settings for users who have changed seats relative to the seats associated with the expected entry points determined based on the outdoor user trajectory (particularly applicable to rear seating).

An eighth step 234 may comprise receiving one or more override settings from a smart device of a user and updating the personalised vehicle settings for that user based on the one or more override settings. If a user wants to change some of the settings that were automatically applied, they can do so via one or more of:
i. A dedicated mobile device application (e.g. smartphone app). The settings might be
   a. Global: all vehicles, all seats
   b. Or per-vehicle
   c. Or per-seat-type (e.g. just front passenger or back central)
   d. Or per-seat-per-vehicle (e.g. just driver seat of this particular vehicle)
ii. A vehicle dashboard or infotainment system. Ideally this should synchronise the preference back to the mobile device, so in case it's applied globally, it can be reused for other vehicles.

The disclosed apparatus and methods can automatically maximize passenger safety and comfort by applying per-passenger custom / personalised vehicle settings for all passengers and the driver. Such settings can be configured and optimized automatically by using radio signals, including UWB ranging and radar.

Vehicle to wearable/phone communication and ranging (e.g. BLE and/or UWB) can identify users (passengers and driver) approaching the vehicle and if each user is known, then their customization vehicle settings can be applied even as the user is still approaching the vehicle. Outdoor and indoor radio sensing (e.g. UWB radar) can aid the system for passengers (including pets) not equipped with such communication devices which are able to connect to or be recognised by the vehicle customization system.

Furthermore, the controller can track multiple users as they approach the vehicle. Their current as well as predicted trajectories can be used to determine their most probable seat position in order to optimize safety and comfort settings based on that person's preferences for that particular area of the vehicle cabin. This trajectory tracking and analysis can distinguish who is the designated driver and, hence, provide vehicle specific customizations based on that driver's past driving experiences and personal preferences.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An automotive controller for a vehicle configured to:
receive external sensing data representative of an area surrounding the vehicle;
determine approaching user data from the external sensing data, wherein the approaching user data represents one or more approaching users; and
output a control signal to set one or more personalised vehicle settings based on the approaching user data.

2. The automotive controller of claim 1, wherein the approaching user data comprises an expected entry point of each of the one or more approaching users and wherein the controller is configured to output the control signal to set one or more personalised vehicle settings for each approaching user based on the respective expected entry point.

3. The automotive controller of claim 2, wherein the external sensing data comprises localisation data and the automotive controller is configured to:
determine user trajectory data from the localisation data; and
determine the expected entry point of one or more approaching users using the user trajectory data.

4. The automotive controller of claim 2 or claim 3, wherein the external sensing data comprises imagery data and the automotive controller is configured to:
identify the one or more approaching users from the imagery data;
determine user trajectory data by performing motion detection using the imagery data for one or more unconnected users of the one or more approaching users; and
determine the expected entry point of the one or more unconnected users using the user trajectory data.

5. The automotive controller of any of claims 2 to 4, wherein the automotive controller is configured to, for each approaching user, output the control signal to set personalised vehicles settings for an area of an internal cabin of the vehicle associated with the expected entry point of the respective user.

6. The automotive controller of claim 5, wherein the automotive controller is configured to output the control signal to set one or more seat position settings of a seat associated with the expected entry point of each approaching user.

7. The automotive controller of any preceding claim, wherein the automotive controller is configured to receive user setting preferences for at least one user of the one or more approaching users and output the control signal to set the personalised vehicle settings for the at least one user based on the respective user setting preferences.

8. The automotive controller of claim 7, wherein the automotive controller is configured to:
receive the user setting preferences for the at least one user from a smart device of the respective user; or
receive a user ID of the at least one user from a smart device of the respective user and retrieve the user setting preferences from a memory of the vehicle or a remote server, based on the user ID.

9. The automotive controller of any preceding claim, wherein the external sensing data comprises imagery data and the automotive controller is configured to:
determine one or more physical attributes of at least one user of the one or more approaching users from the imagery data; and
output the control signal to set the personalised vehicle settings for the at least one user based on the respective one or more physical attributes.

10. The automotive controller of any preceding claim, wherein the automotive controller is configured to:
identify a conflict between first personalised vehicle settings of a first user and second personalised vehicle settings of a second user; and
determine rationalised vehicle settings based on the first personalised vehicle settings and the second personalised vehicle settings; and
output the control signal to set the rationalised vehicle settings for the first and second users.

11. The automotive controller of any preceding claim, wherein the automotive controller is configured to:
determine that a plurality of approaching users have the same expected entry point based on the external sensing data;
receive internal ranging data and/or internal radar data to determine final seating locations of each of the plurality of approaching users; and
output the control signal to set the personalised vehicle settings for each of the plurality of users based on the final seating locations.

12. The automotive controller of any preceding claim, wherein the automotive controller is configured to:
determine that a plurality of approaching users have the same expected entry point based on the external sensing data;
determine final seating locations based on an order in which the plurality of approaching users enter the vehicle; and
output the control signal to set the personalised vehicle settings for each of the plurality of users based on the final seating locations.

13. The automotive controller of any preceding claim, wherein the automotive controller is configured to output the control signal to set one or more personalised vehicle settings comprising one or more of:
driver specific settings for a driver user;
passenger safety settings for one or more passenger users;
seat position settings for one or more users;
heating ventilation and air conditioning (HVAC) system settings for one or more users;
infotainment settings for one or more users;
audio settings for one or more users; and
light settings for one or more users.

14. An automotive system comprising:
one or more ultra-wideband, UWB, sensors; and
the automotive controller of any preceding claim, wherein the automotive controller is configured to receive the external sensing data as UWB data from the one or more UWB sensors.

15. A method of setting one or more personalised vehicle settings of a vehicle for one or more approaching users, the method comprising:
receiving external sensing data representative of an area surrounding the vehicle;
determining approaching user data from the external sensing data, wherein the approaching user data represents the one or more approaching users; and
outputting a control signal to set the one or more personalised vehicle settings based on the approaching user data.

## Amended claims

### Amended claims in accordance with Rule 137(2) EPC.

1. An automotive controller (100) for a vehicle (102) configured to:
receive external sensing data representative of an area (104) surrounding the vehicle, wherein the external sensing data comprises ultra-wideband data;
determine approaching user data from the external sensing data, wherein the approaching user data represents one or more approaching users (108); and
output a control signal to set one or more personalised vehicle settings based on the approaching user data.

2. The automotive controller (100) of claim 1, wherein the approaching user data comprises an expected entry point of each of the one or more approaching users (108) and wherein the controller is configured to output the control signal to set one or more personalised vehicle settings for each approaching user based on the respective expected entry point.

3. The automotive controller (100) of claim 2, wherein the external sensing data comprises localisation data and the automotive controller is configured to:
determine user trajectory data (114) from the localisation data; and
determine the expected entry point of one or more approaching users (108) using the user trajectory data.

4. The automotive controller (100) of claim 2 or claim 3, wherein the external sensing data comprises imagery data and the automotive controller is configured to:
identify the one or more approaching users (108) from the imagery data;
determine user trajectory data (114) by performing motion detection using the imagery data for one or more unconnected users of the one or more approaching users; and
determine the expected entry point of the one or more unconnected users using the user trajectory data.

5. The automotive controller (100) of any of claims 2 to 4, wherein the automotive controller is configured to, for each approaching user (108), output the control signal to set personalised vehicles settings for an area of an internal cabin of the vehicle (102) associated with the expected entry point of the respective user.

6. The automotive controller (100) of claim 5, wherein the automotive controller is configured to output the control signal to set one or more seat position settings of a seat associated with the expected entry point of each approaching user (108).

7. The automotive controller (100) of any preceding claim, wherein the automotive controller is configured to receive user setting preferences for at least one user (108) of the one or more approaching users and output the control signal to set the personalised vehicle settings for the at least one user based on the respective user setting preferences.

8. The automotive controller (100) of claim 7, wherein the automotive controller is configured to:
receive the user setting preferences for the at least one user (108) from a smart device (112) of the respective user; or
receive a user ID of the at least one user from a smart device of the respective user and retrieve the user setting preferences from a memory of the vehicle or a remote server, based on the user ID.

9. The automotive controller (100) of any preceding claim, wherein the external sensing data comprises imagery data and the automotive controller is configured to:
determine one or more physical attributes of at least one user (108) of the one or more approaching users from the imagery data; and
output the control signal to set the personalised vehicle settings for the at least one user based on the respective one or more physical attributes.

10. The automotive controller (100) of any preceding claim, wherein the automotive controller is configured to:
identify a conflict between first personalised vehicle settings of a first user (108-1) and second personalised vehicle settings of a second user (108-2); and
determine rationalised vehicle settings based on the first personalised vehicle settings and the second personalised vehicle settings; and
output the control signal to set the rationalised vehicle settings for the first and second users.

11. The automotive controller (100) of any preceding claim, wherein the automotive controller is configured to:
determine that a plurality of approaching users (108) have the same expected entry point based on the external sensing data;
receive internal ranging data and/or internal radar data to determine final seating locations of each of the plurality of approaching users; and
output the control signal to set the personalised vehicle settings for each of the plurality of users based on the final seating locations.

12. The automotive controller (100) of any preceding claim, wherein the automotive controller is configured to:
determine that a plurality of approaching users (108) have the same expected entry point based on the external sensing data;
determine final seating locations based on an order in which the plurality of approaching users enter the vehicle (102); and
output the control signal to set the personalised vehicle settings for each of the plurality of users based on the final seating locations.

13. The automotive controller (100) of any preceding claim, wherein the automotive controller is configured to output the control signal to set one or more personalised vehicle settings comprising one or more of:
driver specific settings for a driver user (108-1);
passenger safety settings for one or more passenger users (108-2, 108-3);
seat position settings for one or more users;
heating ventilation and air conditioning (HVAC) system settings for one or more users;
infotainment settings for one or more users;
audio settings for one or more users; and
light settings for one or more users.

14. An automotive system comprising:
one or more ultra-wideband, UWB, sensors (106); and
the automotive controller (100) of any preceding claim, wherein the automotive controller is configured to receive the external sensing data as UWB data from the one or more UWB sensors.

15. A method of setting one or more personalised vehicle settings of a vehicle (102) for one or more approaching users (108), the method comprising:
receiving external sensing data representative of an area surrounding the vehicle, wherein the external sensing data comprises ultra-wideband data;
determining approaching user data from the external sensing data, wherein the approaching user data represents the one or more approaching users; and
outputting a control signal to set the one or more personalised vehicle settings based on the approaching user data.
